# EUROPEAN PATENT APPLICATION

(11) **EP 2 762 457 A1**
(43) Date of publication of application: **06.08.2014**
(21) Application number: 14382008.2
(22) Date of filing: 14.01.2014
(51) Int. Cl.: C03C 1/04, C03C 3/066, C03C 3/093, C03C 4/00, C03C 8/04, C03B 5/16

(54) **Method for forming opaque white crystals inside the vitreous mass of frits and ceramic glazes**

(30) Priority: 16.01.2013 ES 201330044
(71) Applicant: Adicem Valorizacion, S.L., 12006 Castellon de la Plana (ES)
(72) Inventor: Serrano, Pascual Emilio Vicente, 12006 Castellon de la Plana (ES)
(74) Representative: Isern-Jara, Nuria

(57) **Abstract**

Contrary to what has been tested up to the present time and even what is currently being implemented, this method is based on the exact amount of the oxides that the raw materials that are used provide and the reactions that occur during treatment: homogenisation, melting at temperature, time, appropriate particle size and pressure, application on the base and final sintering, such that both the heating and the cooling range of 700-850 and 850-700ºC is slow. The residence time of the ceramic glaze or frit at its maximum temperature must be precise, less than 9 minutes and between 1,000 and 1,100ºC, so that its fluid effect is very high.

## Description

### Field of the Art

The invention is made for use in the frit and ceramic glaze manufacturing industry and in the majolica, stoneware and porcelain stoneware manufacturing industry.

### Object of the Invention

This relates to creating reactions between mineral oxides, which are introduced in appropriate concentrations, artificially obtaining magmatic pyroxenes (MgAl₂SiO₅), with a high refractive index, thereby obtaining SrSiO₃ with a high melting strength and which changes easily to the crystalline state, creating opaque white crystals, already created in nature, eliminating dependence on very refractory zirconium silicate (SiO₄Zr) and reducing energy consumption in the given areas.

Do not use highly refractory gahnites (ZnAl₂O₃) or very photosensitive titanites (CaTiSiO₅) nor diopsides (MgCa₂SiO₃) with a low refractive index, or quite toxic nucleants (P₂O₅), and to name but one more, willemite (ZnSiO₃) refractory, for opacification.

### State of the Art

In order to obtain opacity in frits and ceramic glazes, the products P₂O₅, As₂O₅, Sb₂O₃, CeO₂ and SnO₂ were used. The abovementioned products do not form crystals inside the vitreous mass. They have a high refractive index, and hence their use as opacifiers. They all act as stabilisers for the vitreous mass as their ionic strength is less than 7.

Currently opacity, whiteness and gloss are produced when there are differences between the refractive indices of the phases, vitreous mass and the crystals present therein.

SiO₄Zr, which is also a magmatic silicate, is also used in ceramics to obtain the desired opacity. This SiO₄Zr is stoichiometrically formed by 67.2% ZrO₂ and 32.8% SiO₂ However, it contains 0.2% of Fe₂O₃ and 0.1% of TiO₂ as impurities and HfO₂, U, Th and La as traces in ppm, i.e. it is slightly radioactive. It is extracted primarily to obtain TiO₂.

It is a magmatic silicate, which already has the crystals formed. In the ceramic sector, first it is milled to an appropriate grain size, ground into flour or micronised, then it is mixed with other raw materials and transferred to the frit furnace, wherein the crystals disappear at the temperature the furnace is set to. Some, not all, reappear when the melt is cooled rapidly by pouring it into water, and once dry, it is milled again and then the process of removing the fewer crystals remaining is repeated. It is applied on the base and finally it is fired again with the base in the glazing furnace that the chronotherm is set at, to re-form the initial crystals, although not all of them.

The minerals from the oxides that are introduced in this invention, as well as other elements, have valence, radius and ionic strength, and provided they are in contact in the appropriate concentrations and the precise conditions exist (time, pressure, temperature and size), they will react and the desired products will be obtained. Similarly, in this invention, the very strong energy content of the Si-O-Si bond that current frits have, is increased considerably.

The dilatometric curves for current frits are irregular in time and temperature. This does not happen with the frits of the invention, which are regular.

The softening temperature for current frits is 930°C and 900°C for the frits of the invention. Sphere temperatures for current frits stands at 1,190 °C and 1,130 °C for the frits of the invention. Sealing temperatures are 800°C for current frits and 780°C for the frits of the invention.

If nature creates these crystals, it follows that the minerals they are made up of exist in significant and reasonable amounts. Four require treatment in order to obtain them, the rest only need to be extracted from the rock that contains them and be adapted for use.

The functional isotropy, which the products that are obtained acquire with the compositions of the invention, is more stable than that which the products obtained with the current method have, based on the high fluid effect of the products obtained with this invention, applying the precise parameters for obtaining the artificial magmatic pyroxenes.

### Detailed Description of the Invention

The concentration, in moles, of the oxides to be used must be necessarily within the values given below:

| | | | |
|---|---|---|---|
| Li₂O | 0.03 | and | 0.14 |
| Na₂O | 0.09 | and | 0.28 |
| K₂O | 0.11 | and | 0.32 |
| CaO | 0.02 | and | 0.32 |
| MgO | 0.07 | and | 0.24 |
| SrO | 0.10 | and | 0.42 |
| BaO | 0.06 | and | 0.08 |
| ZnO | 0.02 | and | 0.10 |
| SiO₂ | 1.21 | and | 4.36 |
| Al₂O₃ | 0.13 | and | 0.46 |
| B₂O₃ | 0.03 | and | 0.14 |

The study of the formation of the crystalline phase is no less important than the study of a certain defined structure that is formed in the crystal.

It is necessary that, given the proper parameters, SrSiO₃ is formed, as, on the one hand, it has a high fluid effect and, on the other hand, it is a high-crystallisation compound through the metasilicate phase of the Sr with divalent cations.

The percentage of Al₂O₃ in moles should never be less than 5%. The percentage of B₂O₃ in moles should never exceed 3%. If these conditions are not met, crystallizability is very scarce.

Li₂O is the most active component in the melt, based on the generation of eutectics with the aluminosilicates from other monovalent cations. Their concentrations in moles are between 1% and 2%. The fluid effect increases and the structural connections of the crystals increase due to increased electrostatic attractions between cations and anions (ionic electrolytes).

Thus, the optimal composition in the RO group (basic oxides such as calcium, sodium, zinc, etc.) is paramount. In the case of pyroxenes, Al₂O₃ replaces SiO₂ based on the time, pressure, temperature and particle size, determining the mineral phases that will appear by structural polymorphism. They are SiO₂, Al₂O₃, K20, Na₂O and CaO. The main difference between the current opacification systems for ceramic frits and that set forth in the present invention, is that it uses a controlled creation of artificial magma.

Currently, the following limits apply in respect of obtaining opaque white glazes:
1 RO (basic oxides) -0.1 Al₂O₃-2.5 SiO₂
or also 1 RO (basic oxides)-O.4 Al₂O₃-4.5 SiO₂

In the same way, the sum of the moles of the RO group, in moles, must be 1. The Al₂O₃ moles should be between 0.28 and 0.40. The SiO₂ moles are obtained from the product by 10 of the A1₂O₃ moles. The B₂O₃ moles are derived by multiplying the SiO₂ moles by 1.6. The sum of Na₂O, K20 and BaO moles must be less than 0.5. The CaO moles must be between 0.5 and 0.57. The ZnO moles must be less than 0.15. The MgO moles must be less than 0.15. In respect of the amount of Si04Zr, it should be specified that this is between 8% and 12% by weight of the total mixture.

This cannot be done in this invention, if the concentrations given in the above table are adhered to.

In this invention, the Al2O₃/SiO₂ ratio must be within the range of 1/2 and 1/4 in order to obtain crystals. SrO and Li₂O must also be present, hence the fluid effect of the products that melt, which is based on the energy required to break or weaken the bonds. The SrO and Li₂O significantly reduce this energy.

The present invention is based on work conducted back in 1950 both by the Institute of Science and Ceramics of the USSR and the National Research Council of Canada to replace PbO₂, due to its toxicity, with SrO and only to achieve the same fluid effect. As part of that work, the concentrations of moles, ratios between them, pressures, times, temperatures and particle sizes were adapted to the production elements of the time.

The scientific basis have been taken in this invention and have been significantly modified to be adapted to current production processes, as SrO has a number of other properties, apart from its significant fluid effect, that have resulted in this invention in totally different ceramic frits and glazes to those currently used, and with significantly improved output.

The targets that were flagged for the embodiment of the invention were the stability ratios of the structural polymorphs of the aluminium and magnesium metasilicate (54% SiO₂, 21% Al₂O₃ and 25% MgO), its volumetric reduction, sintering mechanisms, the microstructural properties, development of the crystalline phases and the amount of the glassy phase. All this, as mentioned above, arises from the processing conditions the different compositions and characteristics of the raw materials that are used have to undergo.

### PREFERRED EMBODIMENT OF THE INVENTION

This patent for a "Method for forming opaque white crystals inside the vitreous mass of frits and ceramic glazes", proposes a treatment comprising the following:
a) The concentration, in moles, of the oxides to be used must be necessarily within the values given below:
b)

| | | | |
|---|---|---|---|
| Li₂O | 0.03 | and | 0.14 |
| Na₂O | 0.09 | and | 0.28 |
| K₂O | 0.11 | and | 0.32 |
| CaO | 0.02 | and | 0.32 |
| MgO | 0.07 | and | 0.24 |
| SrO | 0.10 | and | 0.42 |
| BaO | 0.06 | and | 0.08 |
| ZnO | 0.02 | and | 0.10 |
| SiO₂ | 1.21 | and | 4.36 |
| Al₂O₃ | 0.13 | and | 0.46 |
| B₂O₃ | 0.03 | and | 0.14 |

For each frit to be prepared, the precise oxides are taken from the table above without exceeding the limits set out. The following rules should also be observed: The sum of RO moles (basic oxides) must be between 0.8 and 1.7 moles. The B₂O₃ moles are derived by multiplying the K₂O moles by 0.3. The sum of the Na₂O, K₂O, BaO, MgO moles must be less than 0.63. The B₂O₃ moles are obtained by multiplying the K₂O moles by 0.3. The SrO moles are obtained by multiplying the MgO moles by 1.5. The sum of the ZnO and MgO moles must be less than 0.28. The Li₂O moles are derived by multiplying the Na₂O moles by 0.3. The Al₂O₃-SiO₂ ratio must be between 1/2 and 1/4.
b) In respect of the selected oxides, the formula for the raw materials that the oxides provide are obtained either by the Seger method, percentages or software program.
c) All raw materials are mixed by means of a mechanical homogenizer until they are all uniform, and with a particle size less than or equal to 100 microns.
d) The next step is to blend the uniform mixture which is carried out in a suitable furnace at a temperature between 1,100 and 1,300°C and at a pressure of 5.99 bars, using O₂ and natural gas. This provides the precise fluid effect for obtaining the first crystals.
e) Once the mixture is molten and depending on the furnace in which it was made, it is cooled rapidly, usually using water. There is a new formation of crystals. Subsequently, the moisture is removed by drying.
f) Whether a frit or a ceramic glaze, the next step is the grinding process together with water. It is advisable to use formaldehyde or montmorillonite instead of kaolin as a suspension agent for these products, as kaolin introduces Al₂O₃ and SiO₂, which would destroy the chosen composition eliminating its crystallizer effect. The barbotine obtained must have a certain particle size such that at 1,600-1,700 g/I on a 45 micron sieve, a residue of 2% by volume is retained.
g) Under the above conditions, whether dealing with a frit or a ceramic glaze it is applied to the base, subsequently being transferred to the glazing furnace. For this invention, and for existing furnaces it is necessary that heating at 700-850°C is slow and at a 4 bar pressure. The temperature in the firing zone should be between 1,100 and 1,130°C at a pressure of 8.99 bars. Cooling, at 850-700°C, is also slow and at a pressure of 4.99 bars.

## Claims

1. Method for forming opaque white crystals inside the vitreous mass of frits and ceramic glazes, **characterised in that** it comprises the following steps:
a) Selection of molar concentrations of the oxides to be used.
b) Preparation of the frit using the Seger method, % or software program.
c) Selection of raw materials and preparation of the formula. Homogenisation.
d) Smelting of the selected mixture between 1,100-1,300°C and 5.99 bars of pressure.
e) Drying of the frit, glaze composition.
f) Milling with water.
g) Firing and cooling.

2. Method according to claim 1, **characterised in that** during step a) the molar concentrations of the selected oxides must be within the following ranges:
| | | | |
|---|---|---|---|
| Li₂O | 0.03 | and | 0.14 |
| Na₂O | 0.09 | and | 0.28 |
| K₂O | 0.11 | and | 0.32 |
| CaO | 0.02 | and | 0.32 |
| MgO | 0.07 | and | 0.24 |
| SrO | 0.10 | and | 0.42 |
| BaO | 0.06 | and | 0.08 |
| ZnO | 0.02 | and | 0.10 |
| SiO₂ | 1.21 | and | 4.36 |
| Al₂O₃ | 0.13 | and | 0.46 |
| B₂O₃ | 0.03 | and | 0.14 |

3. Method according to claim 1, **characterised in that** during step a), the formula is prepared such that for each frit to be prepared, the precise oxides are taken from the table above without exceeding the limits set out, in accordance with the following criteria:
- The sum of RO moles (basic oxides) must be between 0.8 and 17 moles.
- The B₂O₃ moles are derived by multiplying the K₂O moles by 0.3.
- The sum of Na₂O, K₂O, BaO, MgO moles must be less than 0.63.
- The B₂O₃ moles are obtained by multiplying the K₂O moles by 0.3.
- The SrO moles are obtained by multiplying the MgO moles by 1.5.
- The sum of ZnO and MgO moles must be less than 0.28.
- The Li₂O moles are derived by multiplying the Na20 moles by 0.3.
- The Al₂O₃-SiO₂ ratio must be between 1/2 and 1/4.

4. Method according to claim 1 **characterised in that** during step b) and c) the raw materials are selected using the Seger method, percentages or software programme and are blended mechanically to a homogenous mixture, both in composition and in a 100 micron particle size.

5. Method according to claim 1, **characterised in that** during step d), the homogeneous mixture is transferred to the smelting furnace in which the operation is complete at a temperature of between 1,100 and 1,300 C and at a pressure of 5.99 bars and using 02 and natural gas.

6. Method according to claim 1, **characterised in that** during step e) and f), the frit or glaze is dry and wet milled, and to maintain in suspension, montmorillonite or formaldehyde must be used at 1,600-1,700 g/I density and on a 45 micron sieve the remaining residue should not, in any case, exceed 2% by volume, having the particular characteristic that firing should be slow during the heating phase, between 700 and 850 C at a pressure of 4 bars and in the zone of maximum temperature up to 1,130 C and a maximum of 8.99 bars in a short time, a maximum time of 8 minutes, while cooling, in the range of 850-700 C is also slow and at a pressure of 4.99 bars.
